# EUROPÄISCHE PATENTSCHRIFT

(11) **EP 2 401 185 B1**
(45) Veröffentlichungstag und Bekanntmachung des Hinweises auf die Patenterteilung: **07.06.2017**
(21) Anmeldenummer: 10700850.0
(22) Anmeldetag: 13.01.2010
(51) Int. Cl.: B60W 50/08, B60W 50/02, B60L 3/00

(54) **VERFAHREN ZUR VERWALTUNG EINER ENERGIEVERSORGUNG**
METHOD FOR ENERGY SUPPLY MANAGEMENT
PROCÉDÉ POUR GÉRER LA DISTRIBUTION D'ÉNERGIE

(30) Priorität: 27.02.2009 DE 102009001213
(43) Veröffentlichungstag der Anmeldung: 04.01.2012
(73) Patentinhaber: Robert Bosch GmbH, 70442 Stuttgart (DE)
(72) Erfinder: SCHENK, Joachim, 38536 Seershausen (DE); Aumayer, Richard, 14059 Berlin (DE)
(86) Internationale Anmeldenummer: PCT/EP2010/050335
(87) Internationale Veröffentlichungsnummer: WO 2010/097249

(56) Entgegenhaltungen:
- DE-A1-102005 055 165
- DE-A1-102007 032 210
- US-A- 5 664 635
- US-A1- 2003 209 375

## Beschreibung

Die Erfindung betrifft ein Verfahren zur Verwaltung bzw. zum Management einer Energieversorgung, eine Anordnung zur Verwaltung einer Energieversorgung, ein Computerprogramm und ein Computerprogrammprodukt.

### Stand der Technik

Heutige Fahrzeuge sind zunehmend mit Energiemanagement-Funktionen, z. B. für Batterien, ausgerüstet. Dabei sind die Batteriekapazität und die Kaltstartstromfähigkeit wichtige Betriebsparameter der Batterie und dienen gleichzeitig als Batteriegrößenangabe. Die in den Fahrzeugen zum Einsatz kommenden Batteriegrößen sind sehr eng gestuft, so dass eine messtechnische Erfassung im Fahrzeug in Verbindung mit den bekannten Algorithmen aufgrund der hohen Toleranzen nicht möglich ist.

Aus der Druckschrift US 5 664 635 A ist eine Vorgehensweise zum automatischen Erkennen eines Batteriewechsels bei einem Hybrid-Fahrzeug bekannt. Hierzu sind sensorische Vorrichtungen zur Bestimmung elektrischer Parameter einer in dem Hybrid-Fahrzeug eingebauten Batterie vorgesehen.

Eine Vorrichtung für das Management des Zustands einer bordeigenen, in ein Fahrzeug eingebauten Batterie ist aus der Druckschrift DE 10 2005 055 165 A1 bekannt. Diese Vorrichtung umfasst ein Feststellungsmittel, um festzustellen, ob die bordeigene Batterie gegen eine neue bordeigene Batterie ausgewechselt wurde, und ein Herbeiführungsmittel zur Durchführung eines Motorstarts nach dem Austausch der bordeigenen Batterie in Fällen, in denen festgestellt wurde, dass die bordeigene Batterie gegen eine neue Batterie ausgetauscht wurde. Dabei kann automatisch durch Benutzung einer einfachen Schaltung der Vorrichtung festgestellt werden, ob ein Batterieaustausch gegen eine neue Batterie stattgefunden hat oder nicht, was es ermöglicht, dass das Versäumen einer manuellen Eingabe einer Information über den Batterieaustausch folgenlos bleibt.

### Offenbarung der Erfindung

Die Erfindung betrifft ein Verfahren zur Verwaltung einer Energieversorgung, die zur Versorgung mindestens einer Einrichtung mit elektrischer Energie ausgebildet ist, bei dem eine Unterbrechung mindestens einer Versorgungsleitung zwischen einer Batterie und der mindestens einen Einrichtung erkannt wird und eine Aufforderung zur Eingabe eines Werts für mindestens einen Betriebsparameter erfolgt.

In Ausgestaltung des Verfahrens wird der Nutzer, üblicherweise über eine Anzeigeeinheit, die mit einer Batteriemanagementeinheit zusammenwirkt und ein Batteriegrößen-Menü umfasst, dazu aufgefordert, den Wert für den mindestens einen Betriebsparameter der Batterie einzugeben oder auszuwählen und zu bestätigen. Als der mindestens eine Betriebsparameter kann ein Wert einer elektrischen Nenngröße bzw. einer Größe der Batterie, bspw. der Nennspannung in Volt oder der Kapazität der elektrischen Ladung der Batterie in Amperestunden (Ah), vorgesehen sein. Als Batterie werden im Rahmen der Erfindung Primärbatterien, die nicht wiederaufladbar sind, und Sekundärbatterien, die auch als Akkumulatoren bezeichnet werden, verstanden.

Das Verfahren kann nach einem Anschluss der Batterie an die mindestens eine Einrichtung durchgeführt werden. Falls die Eingabe des mindestens einen Betriebsparameters durch den Nutzer nicht vorgenommen wird, kann vorgesehen sein, dass ein Betrieb oder Standardbetrieb der mindestens einen Einrichtung unterbunden wird. Demnach kann die geforderte Eingabe als Bedingung zum Start und/oder zur Fortsetzung des Betriebs der mindestens einen Einrichtung verwendet werden.

Bei einer möglichen Umsetzung des Verfahrens wird dem Nutzer mindestens ein Wert für den mindestens einen Betriebsparameter zur Auswahl vorgeschlagen. Dies erfolgt üblicherweise über das Batteriegrößen-Menü.

Die Erfindung betrifft weiterhin eine Anordnung zur Verwaltung einer Energieversorgung, die zur Versorgung mindestens einer Einrichtung mit elektrischer Energie ausgebildet ist, wobei die Anordnung eine Batteriemanagementeinheit aufweist, die dazu ausgebildet ist, eine Unterbrechung mindestens einer Versorgungsleitung zwischen einer Batterie und der mindestens einen Einrichtung zu erkennen und zur Eingabe eines Werts für mindestens einen Betriebsparameter aufzufordern.

Die Anordnung kann mit mindestens einer Anzeigeeinheit, die ein Menü, üblicherweise das Batteriegrößen-Menü, aufweist, zusammenwirken. Die Anzeigeeinheit ist dazu ausgebildet, den Nutzer aufzufordern, den Wert für den mindestens einen Betriebsparameter einzugeben. Eine derartige Aufforderung kann durch mindestens ein optisches und/oder akustisches Signal erfolgen. Die genannte Anzeigeeinheit kann als Komponente der Anordnung ausgebildet sein. Es ist jedoch auch möglich, dass die Anforderung an den Nutzer zur Eingabe des mindestens einen Parameters durch eine externe Anzeigeeinheit, die ansonsten zu anderen Zwecken benutzt wird, bereitgestellt wird. So kann zu einer Umsetzung der Erfindung eine Anzeigeeinheit eines Radios oder eines anderen Geräts verwendet werden. Zukünftig produzierte Fahrzeuge weisen in der Regel mindestens eine Anzeigeeinheit (Display) auf, die typischerweise zur Umsetzung des Verfahrens genutzt werden kann.

Außerdem kann die Anordnung mit mindestens einer Eingabeeinheit zusammenwirken, in die der Wert für den mindestens einen Betriebsparameter von dem Nutzer typischerweise manuell einzugeben ist. Dabei kann die mindestens eine Eingabeeinheit eine Tastatur umfassen. Diese Eingabeeinheit kann als Komponente der Anordnung oder als externe Eingabeeinheit, die ohnehin in einem Fahrzeug vorhanden ist und üblicherweise für andere Zwecke genutzt wird, ausgebildet sein.

Die Anordnung ist in einer Ausgestaltung in einer als Fahrzeug, bspw. Kraftfahrzeug, ausgebildeten Einrichtung angeordnet.

Mit der Erfindung wird ein pragmatischer Ansatz zur Bereitstellung der Information zur Batteriegröße über das Batteriegrößen-Menü der Batteriemanagementeinheit bereitgestellt.

Die im Rahmen einer Ausführungsform des Verfahrens vorgesehene Aufforderung zur Eingabe des mindestens einen Parameters, typischerweise der Größe der Batterie, über das Menü, kann nach Erkennung einer Unterbrechung der Klemme 30 (Kl.30) für eine Plusleitung von der Batterie erfolgen.

Eine Ausführung des Verfahrens ermöglicht eine einfache und sichere Bereitstellung einer Information über den mindestens einen Betriebsparameter und somit auch die Größe der Batterie und damit eine effiziente und genaue Nutzung von Energiemanagementfunktionen und eines Batteriesensors, der bei Betrieb der mindestens einen Einrichtung üblicherweise zur Überwachung von den Betriebsparametern der Batterie ausgebildet ist. Dabei ergibt sich weiterhin eine Schonung einer Leistung eines Microcontrollers (µc) und einer Größe eines Speichers des Batteriesensors. Beide genannten Komponenten sind üblicherweise in einem Schaltkreis (ASIC) zu realisieren.

Mit der Erfindung können die hierzu vorgesehenen Maßnahmen in wenigen Menüzeilen in einem kombinierten Mikrocontroller oder in einem Radiomikrocontroller umgesetzt werden. Folglich können zumindest einzelne Schritte des Verfahrens auch von Komponenten, bspw. eine Anzeige- und/oder Eingabeeinheit und/oder einer als Radio ausgebildeten Anordnung durchgeführt werden. Insgesamt ist eine Einsparung von Entwicklungskosten möglich.

In einer Ausgestaltung des Verfahrens können dem Nutzer in einem Auswahlmenü der Anzeigeeinheit bzw. eines Anzeigefelds verschiedene einrichtungsspezifische, typischerweise fahrzeugspezifische Batterien vorgeschlagen werden, unter denen der Nutzer die aktuell angeschlossene Batterie auswählen kann. Dadurch ergibt sich weiterhin die Möglichkeit einer leichten Erkennung oder Warnung vor der Installation einer zu kleinen oder zu großen und somit einer nicht geeigneten Batterie in der Einrichtung.

Die beschriebene Anordnung ist dazu ausgebildet, sämtliche Schritte des vorgestellten Verfahrens durchzuführen. Dabei können einzelne Schritte dieses Verfahrens auch von einzelnen Komponenten der Anordnung durchgeführt werden. Weiterhin können Funktionen der Anordnung oder Funktionen von einzelnen Komponenten der Anordnung als Schritte des Verfahrens umgesetzt werden.

Außerdem ist es möglich, dass Schritte des Verfahrens als Funktionen einzelner Komponenten der Anordnung oder der gesamten Anordnung realisiert werden.

Die Erfindung betrifft weiterhin ein Computerprogramm mit Programmcodemitteln, um alle Schritte eines beschriebenen Verfahrens durchzuführen, wenn das Computerprogramm auf einem Computer oder einer entsprechenden Recheneinheit, insbesondere in einer erfindungsgemäßen Anordnung, ausgeführt wird.

Das erfindungsgemäße Computerprogrammprodukt mit Programmcodemitteln, die auf einem computerlesbaren Datenträger gespeichert sind, ist zum Durchführen aller Schritte eines beschriebenen Verfahrens ausgebildet, wenn das Computerprogramm auf einem Computer oder einer entsprechenden Recheneinheit, bspw. in einer erfindungsgemäßen Anordnung, ausgeführt wird.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen
Figur 1 zeigt in schematischer Darstellung eine Ausführungsform einer erfindungsgemäßen Anordnung.
Figur 2 zeigt ein Diagramm zu einer Ausführungsform des erfindungsgemäßen Verfahrens.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten.

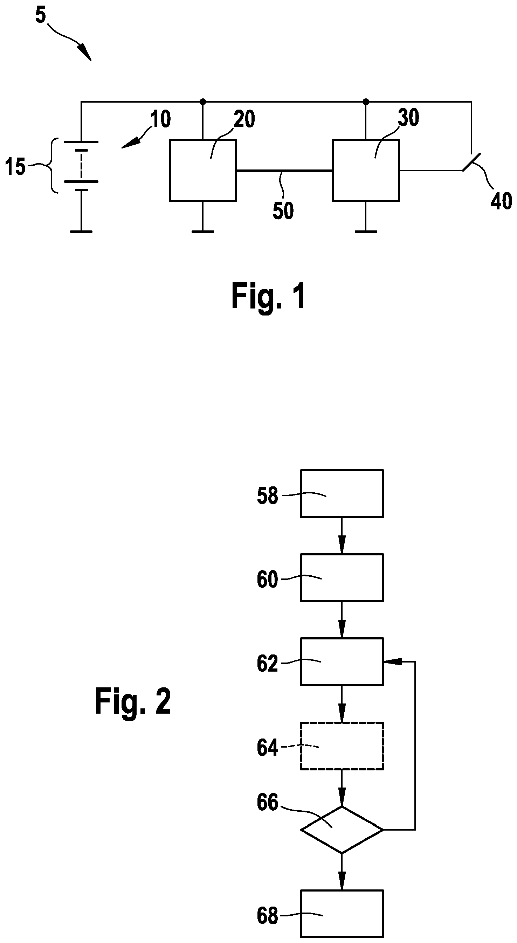

Die in Figur 1 schematisch dargestellte Ausführungsform einer erfindungsgemäßen Anordnung 5, die zur Durchführung des erfindungsgemäßen Verfahrens vorgesehen ist, umfasst eine Batterieaufnahmeeinheit 15 einer technischen Einrichtung, in die hier eine Batterie 10 eingesetzt ist. Mit der in der Batterieaufnahmeeinheit 15 angeordneten Batterie 10 ist es möglich, die technische Einrichtung während eines Betriebs mit elektrischer Energie zu versorgen. Weiterhin umfasst die Anordnung 5 eine Batteriemanagementeinheit 20, mindestens eine Anzeigeeinheit 30, die auch als Displaygerät bezeichnet wird, eine Eingabeeinheit 40, die auch als Bedienelement bezeichnet wird, und einen Datenbus 50, der typischerweise als CAN-Datenbus eines Controller Area Networks oder LIN Local Area Network ausgebildet ist.

Bei der Anzeigeeinheit 30 und der Eingabeeinheit 40 kann es sich jeweils um eine interne oder externe Vorrichtung handeln. Falls es sich um eine externe Vorrichtung handelt, ist diese nicht als Komponente der Anordnung 5 ausgebildet. In diesem Fall wird die mindestens eine Vorrichtung, d. h. die Anzeigeeinheit 30 und/oder die Eingabeeinheit 40, üblicherweise auch zu anderen Zwecken während eines Betriebs der Einrichtung verwendet. Falls jedoch nach einer Unterbrechung einer Verbindung zwischen der Einrichtung und der Batterie 10 eine Ausführungsform des erfindungsgemäßen Verfahrens durchzuführen ist, wird die mindestens eine beschriebene Vorrichtung, d. h. die Anzeigeeinheit 30 und/oder die Eingabeeinheit 40, zur Durchführung des Verfahrens verwendet.

Es ist vorgesehen, dass eine Unterbrechung eines Energieversorgungssystems für die technische Einrichtung von der Batterie 10 in der vorliegenden Ausführungsform durch die Batteriemanagementeinheit 20 erkannt wird. Sobald die Unterbrechung behoben ist und die Batterie 10 wieder korrekt in der Batterieaufnahmeeinheit 15 eingesetzt ist, erfolgt durch die Batteriemanagementeinheit 20, eine Aktivierung der Anzeigeeinheit 30. Dies bedeutet in der beschriebenen Ausführungsform, dass ein Nutzer oder Bediener über einen Text, der in der Anzeigeeinheit 30 dargestellt wird, dazu aufgefordert wird, mindestens einen Betriebsparameter der Batterie, üblicherweise die Größe der Batterie, aus einer ebenfalls über die Anzeigeeinheit 30 dargestellten Auswahlliste über die Eingabeeinheit 40 auszuwählen oder ggf. einen konkreten Wert einzutragen. Die Aufforderung an den Nutzer kann alternativ oder ergänzend akustisch erfolgen.

Falls der Betriebsparameter der eingesetzten Batterie nicht in der Auswahlliste vorhanden ist, kann ein ähnlicher Wert für den mindestens einen Betriebsparameter ausgewählt werden. Der Wert für den mindestens einen Betriebsparameter der Batterie 10 wird über den Datenbus 50 der Batteriemanagementeinheit 20 übermittelt. Bei der vorliegenden Ausführungsform der Anordnung 5 kann weiterhin vorgesehen sein, dass die Eingabeeinheit 40 und die Bedieneinheit 30 über den Datenbus 50 miteinander verbunden sind.

Das in Figur 2 gezeigte Diagramm zeigt einzelne Schritte einer Ausführungsform des erfindungsgemäßen Verfahrens. Dabei erfolgt in einem ersten Schritt eine Erkennung einer Unterbrechung 58 eines Energieversorgungssystems einer technischen Einrichtung von einer Batterie 10. Dabei kann die Unterbrechung 58 üblicherweise von einer Batteriemanagementeinheit 20 erkannt werden. Eine Behebung 60 der Unterbrechung 58 erfolgt in einem zweiten Schritt durch Wiederherstellung einer Verbindung zwischen der Batterie 10 und dem Energieversorgungssystem.

In einem dritten Schritt erfolgt in Reaktion auf die Behebung 60 der Unterbrechung 58 eine Aufforderung 62 zur Eingabe eines Werts für mindestens einen Betriebsparameter an den Nutzer. Diese Aufforderung 62 wird über ein Betriebsgrößen-Menü der Anzeigeeinheit 30 bereitgestellt. In einem optionalen vierten Schritt 64 kann vorgesehen sein, dass von dem Betriebsgrößen-Menü der Anzeigeeinheit 30 dem Nutzer ein Vorschlag 64 für den Wert des mindestens einen Betriebsparameters bereitgestellt wird, so dass der Nutzer jenen vorgeschlagenen Wert des mindestens einen Betriebsparameters, der zu der zuvor eingesetzten Batterie 10 kompatibel ist, auswählen kann.

In einem fünften Schritt des Verfahrens ist eine Eingabe 66 des Werts des mindestens einen Betriebsparameters vorgesehen. Folglich ist von dem Nutzer bei diesem Schritt der Wert für den mindestens einen Betriebsparameter üblicherweise über ein Batteriegrößen-Menü der Eingabeeinheit 40 einzugeben oder, falls das Verfahren den optionalen vierten Schritt, bei dem die Auswahl 64 vorgesehen ist, umfassen sollte, den Wert nur zu bestätigen.

Falls der Wert für den mindestens einen Betriebsparameter der Batterie 10 ordnungsgemäß eingegeben wird, kann in einem nachfolgenden Schritt unverzüglich der Betrieb 68 der technischen Einrichtung aufgenommen werden, da nunmehr der Wert des mindestens einen Betriebsparameters der Batterie 10 bekannt ist. Falls die Eingabe 66 jedoch nicht korrekt durchgeführt wurde, ist in der vorliegenden Ausführungsform vorgesehen, dass der dritte Schritt wiederholt wird und erneut eine Aufforderung 62 zur Eingabe des Werts des mindestens einen Betriebsparameters der Batterie 10 erfolgt.

## Patentansprüche

1. Verfahren zur Verwaltung einer Energieversorgung für mindestens eine Einrichtung, bei dem eine Unterbrechung (58) mindestens einer Leitung zwischen einer Batterie (10) und der mindestens einen Einrichtung erkannt wird, **dadurch gekennzeichnet, dass** nach einer Behebung (60) der Unterbrechung eine Aufforderung (62) zur Eingabe (66) eines Werts für mindestens einen Betriebsparameter erfolgt, wobei ein Nutzer dazu aufgefordert wird, den Wert für den mindestens einen Betriebsparameter der Batterie (10) einzugeben oder auszuwählen und zu bestätigen.

2. Verfahren nach Anspruch 1, das nach einem Anschluss der Batterie (10) an die mindestens eine Einrichtung durchgeführt wird.

3. Verfahren nach Anspruch 1 oder 2, bei dem der mindestens eine Betriebsparameter als eine Größe der Batterie (10) verwendet wird.

4. Verfahren nach einem der voranstehenden Ansprüche, bei dem mindestens ein Wert für mindestens einen Betriebsparameter zur Auswahl (64) vorgeschlagen wird.

5. Anordnung zur Verwaltung einer Energieversorgung für mindestens eine Einrichtung, wobei die Anordnung (5) eine Batteriemanagementeinheit (20) aufweist, die dazu ausgebildet ist, eine Unterbrechung mindestens einer Leitung zwischen einer Batterie (10) und der mindestens einen Einrichtung zu erkennen und nach einer Behebung (60) der Unterbrechung zur Eingabe (66) eines Werts für mindestens einen Betriebsparameter aufzufordern, wobei die Anordnung (5) mit mindestens einer Anzeigeeinheit (30) zusammenwirkt, die dazu ausgebildet ist, einen Nutzer dazu aufzufordem, den Wert für den mindestens einen Betriebsparameter einzugeben.

6. Anordnung nach Anspruch 5, die mit mindestens einer Eingabeeinheit (40) zusammenwirkt, in die der Wert für den mindestens einen Betriebsparameter einzugeben ist.

7. Anordnung nach Anspruch 5 oder 6, die in einer als Fahrzeug ausgebildeten Einrichtung angeordnet ist.

8. Computerprogramm mit Programmcodemitteln, um alle Schritte eines Verfahrens nach einem der Ansprüche 1 bis 4 durchzuführen, wenn das Computerprogramm auf einem Computer oder einer entsprechenden Recheneinheit, insbesondere in einer Anordnung (5) nach einem der Ansprüche 5 bis 7, ausgeführt wird.

9. Computerprogrammprodukt mit Programmcodemitteln, die auf einem computerlesbaren Datenträger gespeichert sind, um alle Schritte eines Verfahrens nach einem der Ansprüche 1 bis 4 durchzuführen, wenn das Computerprogramm auf einem Computer oder einer entsprechenden Recheneinheit, insbesondere in einer Anordnung (5) nach einem der Ansprüche 5 bis 7, ausgeführt wird.

## Claims

1. Method for managing an energy supply for at least one device, in which an interruption (58) in at least one line between a battery (10) and the at least one device is detected, **characterized in that**, after the interruption has been remedied (60), a request (62) to input (66) a value for at least one operating parameter is made, a user being requested to input or to select and confirm the value for the at least one operating parameter of the battery (10).

2. Method according to Claim 1, which is carried out after the battery (10) has been connected to the at least one device.

3. Method according to Claim 1 or 2, in which the at least one operating parameter is used as a variable of the battery (10).

4. Method according to one of the preceding claims, in which at least one value for at least one operating parameter is proposed for selection (64).

5. Arrangement for managing an energy supply for at least one device, the arrangement (5) having a battery management unit (20) which is designed to detect an interruption in at least one line between a battery (10) and the at least one device and, after the interruption has been remedied (60), to request the input (66) of a value for at least one operating parameter, the arrangement (5) interacting with at least one display unit (30) which is designed to request a user to input the value for the at least one operating parameter.

6. Arrangement according to Claim 5, which interacts with at least one input unit (40) into which the value for the at least one operating parameter is to be input.

7. Arrangement according to Claim 5 or 6, which is arranged in a device in the form of a vehicle.

8. Computer program having program code means for carrying out all steps of a method according to one of Claims 1 to 4 when the computer program is executed on a computer or a corresponding computing unit, in particular in an arrangement (5) according to one of Claims 5 to 7.

9. Computer program product having program code means which are stored on a computer-readable data storage medium in order to carry out all steps of a method according to one of Claims 1 to 4 when the computer program is executed on a computer or a corresponding computing unit, in particular in an arrangement (5) according to one of Claims 5 to 7.

## Revendications

1. Procédé de gestion d'une alimentation en énergie pour au moins un dispositif, dans lequel une interruption (58) d'au moins une ligne entre une batterie (10) et l'au moins un dispositif est détectée, **caractérisé en ce qu'**une demande (62) de fourniture en entrée (66) d'une valeur d'au moins un paramètre de fonctionnement est effectuée après une réparation (60) de l'interruption, dans lequel il est demandé à un utilisateur de fournir en entrée ou de sélectionner et de confirmer la valeur de l'au moins un paramètre de fonctionnement.

2. Procédé selon la revendication 1, qui est mis en oeuvre après un raccordement de la batterie (10) à l'au moins un dispositif.

3. Procédé selon la revendication 1 ou 2, dans lequel l'au moins un paramètre de fonctionnement est utilisé en tant que grandeur de la batterie (10).

4. Procédé selon l'une quelconque des revendications précédentes, dans lequel au moins une valeur de l'au moins un paramètre de fonctionnement est proposée pour la sélection (64).

5. Système de gestion d'une alimentation en énergie pour au moins un dispositif, dans lequel le système (5) comporte une unité de gestion de batterie (20) qui est conçue pour détecter une interruption (58) d'au moins une ligne entre une batterie (10) et l'au moins un dispositif et pour demander la fourniture en entrée (66) d'une valeur d'au moins un paramètre de fonctionnement après une réparation (60) de l'interruption, dans lequel le système (5) coopère avec au moins une unité d'affichage (30) qui est conçue pour demander à un utilisateur de fournir en entrée la valeur de l'au moins un paramètre de fonctionnement.

6. Dispositif selon la revendication 5, qui coopère avec l'au moins une unité d'affichage (40), sur laquelle la valeur de l'au moins un paramètre de fonctionnement doit être fournie en entrée.

7. Dispositif selon la revendication 5 ou 6, qui est disposé dans un moyen réalisé sous la forme d'un véhicule.

8. Programme d'ordinateur comportant des moyens à codes de programmes permettant de mettre en oeuvre toutes les étapes d'un procédé selon l'une quelconque des revendications 1 à 4 lorsque le programme d'ordinateur est exécuté sur un ordinateur ou sur une unité de calcul correspondante, notamment dans un dispositif (5) selon l'une quelconque des revendications 5 à 7.

9. Programme d'ordinateur comportant des moyens à codes de programmes stockés sur un support de données lisible par ordinateur permettant de mettre en oeuvre toutes les étapes d'un procédé selon l'une quelconque des revendications 1 à 4 lorsque le programme d'ordinateur est exécuté sur un ordinateur ou sur une unité de calcul correspondante, notamment dans un dispositif (5) selon l'une quelconque des revendications 5 à 7.
